# EUROPEAN PATENT SPECIFICATION

(11) **EP 0 964 241 B1**
(45) Date of publication and mention of the grant of the patent: **30.07.2003**
(21) Application number: 99401129.4
(22) Date of filing: 07.05.1999
(51) Int. Cl.: G01N 1/24, C12M 1/26

(54) **Sampling method and sampling apparatus for microbiological analysis of air**
Entnahmevorrichtung und Entnahmeverfahren zur mikrobiologischen Analyse von Luft
Dispositif et méthode de prélèvement pour une analyse microbiologique de l'air

(30) Priority: 10.06.1998 FR 9807298
(43) Date of publication of application: 15.12.1999
(73) Proprietor: MILLIPORE, 67120 Molsheim (FR)
(72) Inventor: Lemonnier, Jean, 75006 Paris (FR)
(74) Representative: Santarelli

(56) References cited:
- FR-A- 2 732 692
- GB-A- 1 441 576
- GB-A- 2 224 118
- US-A- 3 922 905

## Description

The invention relates to the microbiological analysis of air.

It is known that, in order to effect such an analysis, use is generally made of a sampling apparatus for depositing micro-organisms, such as bacteria, yeasts or moulds, present in an air sample, on a layer of gel growth medium in a receptacle, and that next this receptacle is put to incubate at the required temperature and for the required length of time to enable the deposited micro-organisms to develop in the form of colonies visible to the naked eye, so that they can be counted and identified.

The invention aims to make it possible to perform the operation of depositing micro-organisms on the layer of gel growth medium under conditions such that the colonies which are visible after incubation faithfully reflect the micro-organism population of the sample being checked.

To this end it proposes a sampling method for the microbiological analysis of air including an operation of depositing micro-organisms on a layer of gel growth medium which is contained in a receptacle by sucking in air at the periphery of the said receptacle in order to cause to pass, through holes in a perforated wall with the same contour as that of the said layer of gel growth medium and disposed opposite this layer and concentrically with it, air which comes to strike the said layer of gel growth medium (such an apparatus is known from GB-A-2224118 or US-A-3922905); characterised in that the said operation of depositing micro-organisms includes the operation of increasing the air suction rate in a predetermined fashion as a function of the volume of air already sucked in.

Increasing the suction rate amounts to increasing the mean speed at which the air strikes the layer of gel growth medium.

This increase in speed, which is effected as a function of the volume of air already sucked in, makes it possible to compensate at least partially for the reduction in the ability of the layer of gel growth medium to retain the micro-organisms because of the drying of the layer of gel growth medium at the place where it is struck by the air, drying which makes it harder and less adherent.

This problem of drying out of the growth medium is known from GB-A-1441576, where the growth medium is prevented from drying out in the air flow by spreading over its surface thin layer of oxyethylene docosylether.

According to preferred features, having regard to the tests carried out by the inventor, the said operation of depositing includes the operation of sucking in a first predetermined volume of air at a first predetermined constant rate and then sucking in a second predetermined volume of air at a second constant predetermined rate higher than the said first predetermined rate.

Preferably, having regard to the characteristics of the gel growth medium generally used for effecting an air analysis:
- the first predetermined volume of air is substantially 500 litres; and/or
- the first predetermined flow rate is adapted so that the mean speed at which the gel growth medium is struck by the jets of air is between 11 and 12 m/s and the second predetermined flow rate so that the mean striking speed is between 14.5 and 15.5 m/s.

The invention also relates, in a second aspect, to an apparatus suitable for implementing the method which has just been disclosed.

To this end it proposes an apparatus having a sieve with a wall perforated with a multitude of holes, means for holding a removable receptacle containing a layer of gel growth medium with a contour similar to that of the said perforated wall in a predetermined position in which the said layer of gel growth medium is disposed opposite the said perforated wall and concentrically with it, and means for sucking air at the periphery of the said receptacle held in the said predetermined position in order to cause to enter the said apparatus, through the said holes, air which strikes the said layer of gel growth medium; characterised in that the said means for sucking air include means arranged to increase the air suction rate in a predetermined fashion as a function of the volume of air already sucked in.

According to preferred features for embodying this apparatus, the said means arranged to increase the air suction rate include means for controlling the speed of rotation of a motor driving a suction turbine according to the number of revolutions already effected by this motor.

The disclosure of the invention will now be continued with a description of an example embodiment given below for illustration and non-limitatively, with reference to the accompanying drawings. In these
- Figure 1 is a perspective view of an apparatus according to the invention;
- Figure 2 is a view thereof in elevation and section;
- Figure 3 is a plan view of the sieve included in this apparatus; and
- Figure 4 is a graph showing the variation in the mean speed at which the air strikes the layer of gel growth medium as a function of the volume of air sucked in.

The apparatus 1 illustrated has a sampling head 2 and a body 3.

The sampling head 2 has a sieve 4, an aerodynamic sleeve 5 on the end of which the sieve 4 is removably mounted, a deflector 6 disposed in the sleeve 5 so that there is an air suction duct 7 between the deflector and the sleeve, and a turbine 8 having a stator 9 fixed to the sleeve 5 and a rotor 10 for sucking air into the duct 7 and for discharging it through the side discharge orifice 9'.

The rotor 10 of the turbine 8 is driven by an electric motor 11, which partially enters the body 3.

The latter serves in general terms to hold the apparatus 1 and to control the motor 11 : the body 3 has externally, opposite the head 2, feet 12 by means of which the apparatus 1 can be placed vertically, a base 13 having a threaded hole for fixing the apparatus 1, for example horizontally, to a support such as a conventional camera tripod, and a handle 14 for gripping the apparatus 1, the body 3 containing a set of electrical batteries 15, an electrical circuit 16 having a display 17 and a simplified keypad 18 disposed above the handle 14 as well as another electrical circuit 19, and a certain number of electrical conductors, not shown, serving to effect the necessary connections between the motor 11, the battery 15 and the circuits 16 and 19.

The sampling head 2 is designed to receive a receptacle 20 containing a layer of gel growth medium 21 with a similar contour to that of the perforated wall 22 of the sieve 4, and to hold this receptacle in the illustrated position in which the layer of gel growth medium is disposed opposite the perforated wall 22 and concentrically with it.

The receptacle 20 is more precisely held by virtue of notches (not illustrated) provided on the end of the aerodynamic sleeve 5, notches in each of which there is housed one of the lugs (not illustrated) which the receptacle 20 has projecting with respect to its lateral wall, the fitting of the base of the receptacle 20 (the part of the receptacle opposite to the surface of the layer of gel growth medium which faces the perforated wall 22) in the deflector 6 serving to close off the latter. More details on the cooperation between the receptacle 20 and the sampling head 2 are given in the French patent application No 98-05166, to which reference can be made if desired.

It should be noted simply that the fact that the receptacle 20 and the sieve 4 are both mounted on the same support (the end of the sleeve 5) makes it possible to have a very precise positioning of the sieve with respect to the receptacle, and that the surface of the layer of gel growth medium 21 which is opposite the perforated wall 22 is delimited at the time of manufacture (when the layer of gel growth medium 21 is poured) by a film tensioned over the end surface of the annular wall which surrounds the layer of gel growth medium 21, so that the geometry of this surface is particularly precise and repetitive from one receptacle 20 to another.

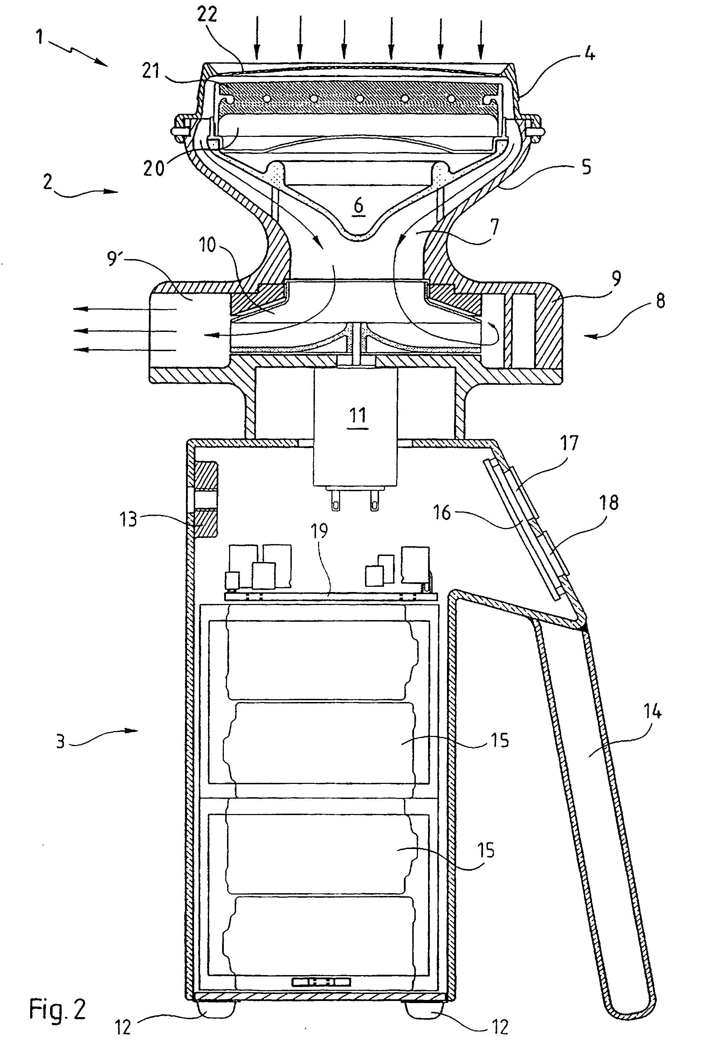

Because of the conformation of the side wall of the receptacle 20 and that of the sieve 4, the duct 7 also exists all around the receptacle 20 so that, when the rotor 10 rotates, there is a suction of air at the periphery of the receptacle 20 and therefore a suction of external air which enters the apparatus 1 though the multitude of holes in the perforated wall 20, as shown by the arrows in Figure 2.

Whereas the surface of the layer of gel growth medium 21 which faces the wall 22 is flat (it is very slightly curved because the film delimiting this surface at the time of manufacture adopts a small deflection when the gel growth medium is poured), the wall 22 is curved in the direction in which it is concave on the side which faces the layer of gel growth medium 21, here in a portion of a sphere, so that the separation between the wall 22 and the layer of gel growth medium 21 increases from their periphery towards their centre.

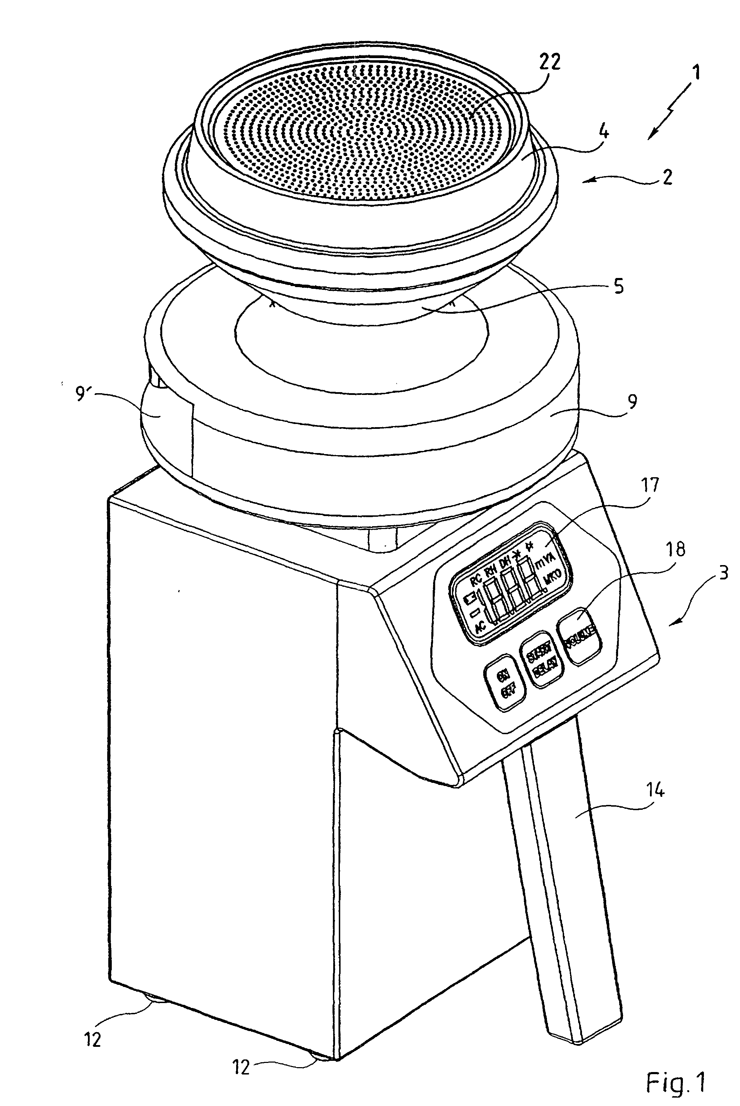

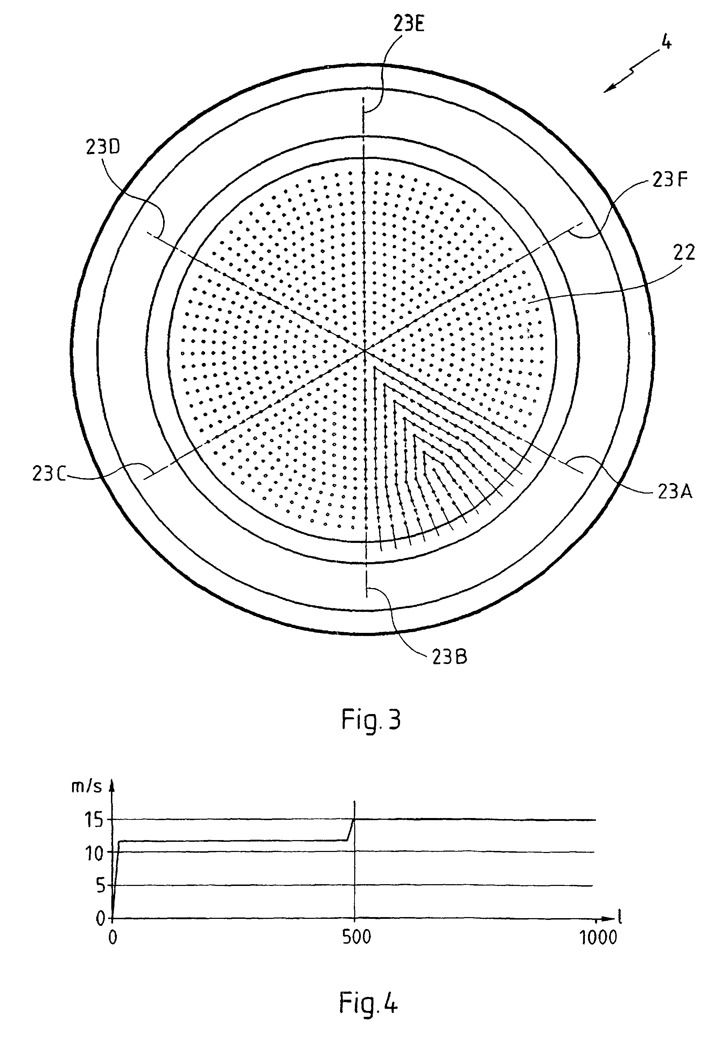

By virtue of this variable separation, the holes provided in the wall 22, which are particularly high in number as can be seen in Figures 1 and 3, are all capable of being useful, that is to say of each creating a flow of air coming to strike the layer of gel growth medium 21 in the form of a jet which encounters the latter at a sufficiently high speed for any micro-organism present in the flow of air to be fixed on the layer of gel growth medium by impaction and sufficiently low for the micro-organism to remain revivable.

As can be seen more particularly in Figure 3, the holes in the perforated wall 22 are solely disposed in concentric circles as well as in six circular sectors delimited by the radii 23A to 23F, which are disposed at 60° to each other.

The holes in the first fourteen consecutive circles as from the centre of each of the six sectors are disposed in a series of parallel chevrons whose apex is turned towards the centre, so that there are six identical series of chevrons which are externally delimited respectively by the chevron formed by the radii 23A and 23B, by that formed by the radii 23B and 23C and so on.

As a result, for each series of chevrons, the apex of the one which is furthest towards the outside is situated on the hole which is exactly at the centre of the perforated wall 22, the apex of the second chevron is on a hole in the second circle, and so on until the seventh and last chevron, whose apex is on the twelfth consecutive circle from the centre.

From the fifteenth to the eighteenth and last circle, the number of holes remains the same as for the fourteenth circle, each of the holes in these circles being aligned on a radius, with a respective hole in the fourteenth circle.

As can be seen in Figure 3 for the sector situated between the radii 23A and 23B, where all the alignments of holes have been depicted, there are channels between these alignments, going as far as the periphery of the wall 22, the number of the channels being higher as the periphery of this wall is approached.

When the rotor 10 is driven in rotation, the jets of air existing between the wall 22 and the layer of gel growth medium 21 are disposed in the same way as the holes in this wall, and there therefore exist, between the alignments of air jets, paths (corresponding to the above mentioned channels) by virtue of which the air can be discharged without obstacle to the peripheral suction channel 7, so that coexistence between the air entering the apparatus in the form of jets and that discharging at the periphery is achieved with a minimum degree of mutual interference.

It will be observed that the concentric circles in which the holes in the wall 22 are disposed are substantially equidistant, and it will be noted that this distance is around 2 mm, that the holes in the wall 22 all have substantially the same size, here a diameter of around 0.5 mm, that the number of holes per unit surface area of the perforated wall is substantially uniform, here around 25 holes per cm², and that the total number of holes in the wall 22 is slightly less than 1000 holes.

Because the separation between the layer of gel growth medium 21 and the perforated wall 22 has geometric characteristics which are repeated from one receptacle 20 to another, the air flow sucked in for each rotation of the rotor 10 remains the same and consequently the speed at which the air strikes the layer of gel growth medium 21 remains the same for the same speed of rotation of the rotor, and the volume of air sucked in remains the same for the same number of rotations effected by the rotor.

Figure 4 shows how the mean speed at which the layer of gel growth medium 21 is struck by the air jets is varied according to the volume already sucked in, that is to say here how the circuits 16 and 19 vary the speed of rotation of the motor 11 as a function of the number of rotations already effected by the latter.

At the start, the speed of rotation of the motor 11 is fixed so that the mean speed of the air through the holes in the wall 22 (the ratio between the total flow rate and the total surface area of the holes) is around 11.5 m/s and this speed is maintained constant until a volume of approximately 500 litres has been sucked in, and the speed of rotation of the motor is then increased so that the mean speed is 15 m/s and this speed of rotation is maintained until the whole of the sample, that is to say 1000 litres (1 m³), has been sucked in.

This variation in the speed of impaction on the gel growth medium as a function of the volume already sucked in reduces the risk that the micro-organisms may not be retained by the layer of gel growth medium because the latter undergoes a certain degree of drying as the sample is taken at each place where the gel growth medium is struck by an air jet, the increase in speed compensating for the increase in hardness and the reduction in adhesion due to the drying.

In a variant which is not shown, the air suction rate (and therefore the mean speed at which the gel growth medium is struck) is increased progressively rather than in stages or with more than two stages; the holes are distributed differently on the perforated wall 22, notably by providing a different number of concentric circles and radii delimiting sectors where the holes are distributed identically; and/or the increase in separation between the layer of gel growth medium and the perforated wall is achieved differently, for example with a perforated wall which is flat and a layer of gel growth medium which is concave on the side which faces the perforated wall.

Numerous other variants are possible according to circumstances, and it should be stated in this regard that the invention is not limited to the examples described and depicted.

## Claims

1. Sampling method for the microbiological analysis of air, including an operation of depositing micro-organisms on a layer of gel growth medium (21) which is contained in a receptacle (20), by sucking in air at the periphery of the said receptacle (20) in order to cause to pass, through holes in a perforated wall (22) with the same contour as that of the said layer of gel growth medium (21) and disposed opposite this layer and concentrically with it, air which comes to strike the said layer of gel growth medium (21); **characterised in that** the said operation of depositing micro-organisms includes the operation of increasing the air suction rate in a predetermined fashion as a function of the volume of air already sucked in.

2. Method according to Claim 1, **characterised in that** the said operation of depositing includes the operation of sucking in a first predetermined volume of air at a first predetermined constant rate and then sucking in a second predetermined volume of air at a second constant predetermined rate higher than the said first predetermined rate.

3. Method according to Claim 2, **characterised in that** the first predetermined volume of air is substantially 500 litres.

4. Method according to either one of Claims 2 or 3, **characterised in that** the first predetermined rate is adapted so that the mean speed at which the gel growth medium is struck by the jets of air is between 11 and 12 m/s and the second predetermined rate so that the mean striking speed is between 14.5 and 15.5 m/s.

5. Apparatus (1) suitable for implementing the method according to any one of Claims 1 to 4, having a sieve (4) with a wall (22) perforated with a multitude of holes, means for holding a removable receptacle (20) containing a layer of gel growth medium (21) with a contour similar to that of the said perforated wall (22) in a predetermined position in which the said layer of gel growth medium (21) is disposed opposite the said perforated wall (22) and concentrically with it, and means for sucking air at the periphery of the said receptacle (20) held in the said predetermined position in order to cause to enter the said apparatus (1), through the said holes, air which strikes the said layer of gel growth medium (21); **characterised in that** the said means for sucking air include means arranged to increase the air suction rate in a predetermined fashion as a function of the volume of air already sucked in.

6. Apparatus according to Claim 5, **characterised in that** the said means arranged to increase the air suction rate are adapted to suck in a first predetermined volume of air at a first predetermined constant rate and then to suck in a second predetermined volume of air at a second predetermined constant rate higher than the said first predetermined rate.

7. Apparatus according to Claim 6, **characterised in that** the first predetermined volume of air is substantially 500 litres.

8. Apparatus according to either one of Claims 6 or 7, **characterised in that** the first predetermined constant rate is adapted so that the mean speed at which the gel growth medium is struck by the air jets is between 11 and 12 m/s and the second predetermined rate so that the mean striking speed is between 14.5 and 15.5 m/s.

9. Apparatus according to any one of Claims 5 to 8, **characterised in that** the said means arranged to increase the air suction rate include means (16, 19) for controlling the speed of rotation of a motor (11) driving a suction turbine (8) according to the number of rotations already effected by this motor.

## Patentansprüche

1. Probeentnahmeverfahren für die mikrobiologische Analyse von Luft, mit einem Vorgang des Aufbringens von Mikroorganismen auf eine Schicht von Gelwachstumsmedium (21), das in einer Aufnahmeeinrichtung (20) enthalten ist, durch Einsaugen von Luft am Umfang der Aufnahmeeinrichtung (20), um zu bewirken, dass durch Löcher in einer perforierten Wand (22), die die gleiche Kontur wie diejenige der Schicht von Gelwachstumsmedium (21) besitzt, und die gegenüber dieser Schicht und konzentrisch zu ihr angeordnet ist, Luft durchströmt, die auf die Schicht von Gelwachstumsmedium (21) auftrifft, **dadurch gekennzeichnet, dass** der Vorgang des Aufbringens von Mikroorganismen den Vorgang des Erhöhens der Luftansaugrate in einer vorbestimmten Art und Weise als Funktion des Volumens von bereits eingesaugter Luft umfasst.

2. Verfahren nach Anspruch 1, **dadurch gekennzeichnet, dass** der Vorgang des Aufbringens den Vorgang des Einsaugens eines ersten vorbestimmten Luftvolumens mit einer ersten vorbestimmten konstanten Rate und dann das Einsaugen eines zweiten vorbestimmten Luftvolumens mit einer zweiten konstanten vorbestimmten Rate, die höher ist als die erste vorbestimmte Rate, umfasst.

3. Verfahren nach Anspruch 2, **dadurch gekennzeichnet, dass** das erste vorbestimmte Luftvolumen im wesentlichen 500 Liter beträgt.

4. Verfahren nach einem der Ansprüche 2 oder 3, **dadurch gekennzeichnet, dass** die erste vorbestimmte Rate so ausgelegt ist, dass die mittlere Geschwindigkeit, mit der das Gelwachstumsmedium von den Luftströmen getroffen wird, zwischen 11 und 12 m/s liegt, und die zweite vorbestimmte Rate, dass die mittlere Auftreffgeschwindigkeit zwischen 14,5 und 15,5 m/s liegt.

5. Vorrichtung (1) die zum Implementieren des Verfahrens gemäß einem der Ansprüche 1 bis 4 geeignet ist, mit einem Sieb (4) mit einer einer Vielzahl von Löchern perforierten Wand (22), Mitteln zum Halten einer entfernbaren Aufnahmeeinrichtung (20), die eine Schicht von Gelwachstumsmedium (21) mit einer ähnlichen Kontur wie die der perforierten Wand (22) in einer vorbestimmten Position aufweist, in der die Schicht von Gelwachstumsmedium (21) gegenüber der perforierten Wand (22) und mit dieser konzentrisch angeordnet ist, sowie Mitteln zum Saugen von Luft am Umfang der in der vorbestimmten Position gehaltenen Aufnahmeeinrichtung (20), um zu bewirken, dass durch die Löcher Luft in die Vorrichtung (1) eintritt, welche auf die Schicht von Gelwachstumsmedium (21) auftrifft, **dadurch gekennzeichnet, dass** die Luftsaugmittel Mittel umfassen, die so vorgesehen sind, dass sie die Luftsaugrate in einer vorbestimmten Art und Weise als Funktion des Volumens von bereits eingesaugter Luft erhöhen.

6. Vorrichtung nach Anspruch 5, **dadurch gekennzeichnet, dass** die Mittel, die zum Erhöhen der Luftansaugrate vorgesehen sind, ein erstes vorbestimmtes Luftvolumen mit einer ersten vorbestimmten konstanten Rate und dann ein zweites vorbestimmtes Luftvolumen mit einer zweiten vorbestimmten konstanten Rate, die höher ist als die erste vorbestimmte Rate, einzusaugen vermögen.

7. Vorrichtung nach Anspruch 6, **dadurch gekennzeichnet, dass** das erste vorbestimmte Luftvolumen im wesentlichen 500 Liter beträgt.

8. Vorrichtung nach einem der Ansprüche 6 oder 7, **dadurch gekennzeichnet, dass** die erste vorbestimmte konstante Rate so eingerichtet ist, dass die mittlere Geschwindigkeit, mit der das Gelwachstumsmedium durch die Luftströme getroffen wird, zwischen 11 und 12 m/s liegt und die zweite vorbestimmte Rate so, dass die mittlere Auftreffgeschwindigkeit zwischen 14,5 und 15,5 m/s liegt.

9. Vorrichtung nach einem der Ansprüche 5 bis 8, **dadurch gekennzeichnet, dass** die Mittel, die zur Erhöhung der Luftsaugrate vorgesehen sind, Mittel (16,19) zum Steuern der Drehgeschwindigkeit eines Motors (11), der eine Saugturbine (8) antreibt, gemäß der Anzahl von bereits von diesem Motor ausgeführten Drehungen umfassen.

## Revendications

1. Procédé de prélèvement pour l'analyse microbiologique de l'air, comportant une opération de dépôt de micro-organismes sur une couche de gélose que contient un récipient (20) par aspiration d'air en périphérie dudit récipient (20) pour faire passer au travers des trous d'une paroi perforée (22) de même contour que celui de ladite couche de gélose (21) et disposée en regard de cette couche et concentriquement à celle-ci, de l'air qui vient frapper ladite couche de gélose (21) ; **caractérisé en ce que** ladite opération de dépôt de micro-organismes comporte l'opération d'augmenter d'une façon prédéterminée le débit d'aspiration d'air en fonction du volume d'air déjà aspiré.

2. Procédé selon la revendication 1, **caractérisé en ce que** ladite opération de dépôt comporte l'opération d'aspirer un premier volume prédéterminé d'air avec un premier débit préfixé constant puis d'aspirer un deuxième volume prédéterminé d'air avec un deuxième débit préfixé constant supérieur audit premier débit préfixé.

3. Procédé selon la revendication 2, **caractérisé en ce que** le premier volume prédéterminé d'air est sensiblement de 500 I.

4. Procédé selon l'une quelconque des revendications 2 ou 3, **caractérisé en ce que** le premier débit préfixé est adapté à ce que la vitesse de frappe moyenne de la gélose par les jets d'air soit comprise entre 11 et 12 m/s et le deuxième débit préfixé à ce que la vitesse moyenne de frappe soit comprise entre 14,5 et 15,5 m/s.

5. Appareil (1) convenant à la mise en oeuvre du procédé selon l'une quelconque des revendications 1 à 4, comportant crible (4) présentant une paroi (22) perforée d'une multitude de trous, des moyens pour maintenir un récipient amovible (20) contenant une couche de gélose (21) de contour similaire à celui de ladite paroi perforée (22) dans une position prédéterminée où ladite couche de gélose (21) est disposée en regard ladite paroi perforée (22) de et concentriquement à celle-ci, et des moyens d'aspiration d'air en périphérie dudit récipient (20) maintenu dans ladite position prédéterminée afin de faire pénétrer dans ledit appareil (1), au travers desdits trous, de l'air qui vient frapper ladite couche de gélose (21) ; **caractérisé en ce que** lesdits moyens d'aspiration d'air comportent des moyens agencés pour augmenter d'une façon prédéterminée le débit d'aspiration d'air en fonction du volume d'air déjà aspiré.

6. Appareil selon la revendication 5, **caractérisé en ce que** lesdits moyens agencés pour augmenter le débit d'aspiration d'air sont adaptés à aspirer un premier volume prédéterminé d'air avec un premier débit préfixé constant puis à aspirer un deuxième volume prédéterminé d'air avec un deuxième débit préfixé constant supérieur audit premier débit préfixé.

7. Appareil selon la revendication 6, **caractérisé en ce que** le premier volume prédéterminé d'air est sensiblement de 500 I.

8. Appareil selon l'une quelconque des revendications 6 ou 7, **caractérisé en ce que** le premier débit préfixé constant est adapté à ce que la vitesse de frappe moyenne de la gélose par les jets d'air soit comprise entre 11 et 12 m/s et le deuxième débit préfixé à ce que la vitesse moyenne de frappe soit comprise entre 14,5 et 15,5 m/s.

9. Appareil selon l'une quelconque des revendications 5 à 8, **caractérisé en ce que** lesdits moyens agencés pour augmenter le débit d'aspiration d'air comportent des moyens (16, 19) pour commander la vitesse de rotation d'un moteur (11) d'entraînement d'une turbine d'aspiration (8) en fonction du nombre de tours déjà effectués par ce moteur.
